# EUROPEAN PATENT SPECIFICATION

(11) **EP 0 575 523 B1**
(45) Date of publication and mention of the grant of the patent: **15.07.1998**
(21) Application number: 92908728.6
(22) Date of filing: 13.03.1992
(51) Int. Cl.: G05D 7/00, G05D 7/01, G05D 7/06

(54) **FLOW REGULATOR ADAPTABLE FOR USE WITH EXHAUST FROM A PROCESS CHAMBER**
DURCHFLUSSREGLER ZUM ANPASSBAREN EINSATZ MIT PROZESSKAMMER-ABFLUSS
REGULATEUR DE DEBIT UTILISABLE POUR LES GAZ PROVENANT D'UNE CHAMBRE DE PRODUCTION

(30) Priority: 15.03.1991 US 669746
(43) Date of publication of application: 29.12.1993
(73) Proprietor: PALMER, David, North Andover, MA 02174 (US)
(72) Inventor: PALMER, David, North Andover, MA 02174 (US)
(74) Representative: Overbury, Richard Douglas
(86) International application number: US9202013
(87) International publication number: WO9216884

(56) References cited:
- CH-A- 551 043
- FR-A- 2 216 498
- FR-A- 2 309 918
- US-A- 500 221
- US-A- 2 803 261
- US-A- 3 053 272
- US-A- 3 312 241
- US-A- 3 853 143
- US-A- 3 978 883
- US-A- 4 873 873

## Description

### Technical Field

This invention generally relates to a device for regulating the flow of a fluid, in particular a gas, through the device.

### Background Art

In a heating, ventilating, and air conditioning (HVAC) system, air flow is typically controlled using resistors to slow down the flow of air at different points to obtain the proper air balance throughout a building. These resistors may be comprised of gate valves, butterfly valves or dampers, and may be fixed, adjustable or motorized. When one resistor is adjusted, the pressure level throughout the HVAC system will change; any change in the HVAC system pressure will affect the flow of air past every other resistor. Thus, adjusting a resistor at the output causes "cross-talk." Previous attempts to solve the problem of air flow control have automated the resistors using micro-processors and servo-motors.

Municipal gas companies in the United States distribute gas through a network that is terminated with pressure regulators. In these gas distribution systems the pressure at the point of use is fairly independent of pressure changes throughout the distribution network. This can be accomplished because the distribution network is designed to withstand large pressures, and a large pressure drop can be caused at the point of use.

The approach, taken by gas companies, of providing a pressure regulator at the point of use has not been practical for the HVAC industry, because the HVAC industry moves very large quantities of air at very low pressure, and because the HVAC industry is usually more interested in controlling mass flow, not pressure. The comfort of the environment is determined by the thermal mass of hot and cold air that is moved.

Safety valves used in the gas industry, and in other fields involving the handling of fluids under high pressure, open or close only in extreme situations where a large rise or drop in pressure poses a danger. (Gas companies have safety valves that shut off the flow of gas when there is a large decrease in pressure, since such a decrease may be due to a leak downstream of the valve. Many safety valves vent fluid from a conduit when there is a large increase in pressure in order to prevent the pressure in the conduit from increasing beyond the bursting point of the conduit, or beyond the capability of machinery connected to the conduit.) Other valves such as those used in gasoline pumps, also shut off flow automatically when the backpressure increases to a certain point, indicating that the tank being filled is full. These safety valves and gasoline-pump valves are designed to be either fully opened or fully closed, and are not designed to precisely regulate the fluid flow.

One of the most complex problems confronted by the HVAC industry is controlling process chambers, such as the clean rooms used in semiconductor integrated-circuit chip manufacturing, or the medical and biotechnology laboratories kept below atmospheric pressure to prevent potentially dangerous microbes from blowing out of the laboratories.

Clean room requirements dictate that the environment be kept at a constant temperature and humidity (typically within a few degrees and a few percent) and that the mass flow into and out of the environment be kept constant. Air is drawn out of a clean room in two ways: some of the air exits the room through process equipment and other work stations with fume hoods, and some air exits directly through vents. It is frequently important that a constant flow rate or a constant partial vacuum be maintained in the process equipment in order to minimize defects in the integrated circuit chips being manufactured and in order to ensure that noxious fumes do not leak from the process equipment or fume hoods and thereby endanger personnel working nearby. Air flowing from the process equipment can be treated at a central location and then can be exhausted to the outside. Air that flows through the clean room, but does not flow through the process equipment may be recycled through the clean room. Clean rooms are typically kept at a pressure slightly above atmospheric pressure, so that dust does not enter the clean room when the doors to the clean room are opened.

With regard to safety, medical and biotechnology laboratories have problems similar to those of integrated chip manufacturing areas. Improper vacuums or flow rates in fume hoods can expose personnel to dangerous microbes. Likewise, air flowing from fume hoods can be treated at a central location before being exhausted to the outside. These laboratories are frequently kept at a pressure slightly below atmospheric pressure, so that microbes do not accidentally blow out of the laboratories when the laboratory doors are opened.

USA 3053272 discloses a vacuum regulator incorporated into an automatic milking system. The regulator maintains the vacuum in the system at a relatively uniform level even though the load on the system may change and includes a displaceable piston whose position is governed by the relative pressures acting on either face of the piston.

USA 3978883 discloses a device for regulating the combustion air of a furnace in order to supply a constant volume of air per unit time. The device includes a displaceable throttle element whose position is varied by means of bellows according to the relative pressures acting on either face of the bellows.

USA 3312241 discloses a fluid control valve to control the flow of pressurised fluid such as steam which is to be fed to turbine units. Moveable grid members which are used to block the flow of fluid are displaced by hydraulic means and are biased in the closed position so that hydraulic pressure is necessary to enable the flow of fluid through the valve.

According to the present invention, there is provided a device for regulating the flow of fluid through a conduit, wherein the device includes impedance means for variably impeding the flow of fluid through the conduit and restoring means operably linked to the impedance means, wherein the impedance means comprises a displaceable piston having a distal face which is exposed to a reference pressure and a frontal face which forms a part of the wall of the conduit so that the impedance to the flow of fluid through the conduit varies as a function of the position of the displaceable piston, and wherein the restoring means is adapted to displace the piston so that the impedance to the flow of fluid through the conduit is reduced, characterised in that the piston is pivotally mounted so as to rotate about a hinge point.

### Disclosure of Invention

The present invention solves the problems found in the prior art systems by providing a self-regulating flow control system. Compared to many of the prior art systems, the present invention is not complex and imparts very little resistance to flow during low flow situations.

The regulator includes a movably mounted piston having a distal face, exposed to a reference pressure, and a frontal face, exposed to fluid passing through the regulator. Preferably, the path of fluid passing through the regulator is substantially straight. It is also preferred that the regulator not be vented at any point between the input and output of the regulator, so that the mass of fluid exiting the regulator is the same as the mass entering the regulator.

Attached to the piston, is a member that variably impedes fluid flowing through the regulator. The amount that this member impedes the fluid flow varies as a function of the difference between the pressure of fluid on the frontal face of the piston and the reference pressure. This member may be an integral part of the piston extending into the path of the fluid flowing through the regulator, or it may be a separate member attached to the piston.

In a preferred embodiment of the invention, this impeding member includes an airfoil segment or several such segments. Each airfoil segment that is movable and attached to the piston has a corresponding airfoil segment that is not movable, so that there are pairs of airfoil segments--each pair having a movable segment and a fixed segment, and each pair forming a complete airfoil. As the piston moves in response to changes in pressure differential across the piston, each movable segment is displaced with respect to its corresponding fixed segment. As the corresponding segments are further displaced with respect to each other, the impedance to flow increases. In this embodiment, as well as other, simpler embodiments, the piston may be hingedly mounted. The movable airfoil segments may also be hingedly attached to the piston.

A restoring force exerts a force on the piston so as to tend to lessen the resistance on the fluid flow, and so that when there is no flow through the passageway the resistance is relatively low. In a preferred embodiment, the restoring force includes the weight of the piston. In other embodiments, a spring may be used to apply or adjust the restoring force.

Preferably, the piston and the impeding member are mounted so as to move in a direction transverse to the direction of fluid flowing past the frontal face of the piston. It is also preferable that the impeding member is mounted downstream of the frontal face of the piston. In one embodiment of the invention, a variable resistance valve is located upstream of the frontal face of the piston, and the reference pressure is the pressure of fluid upstream of the variable resistance means.

The reference pressure may be the same as the environment that the fluid flows from, or alternatively it may be the same as the pressure somewhere else upstream of the piston or the variable resistance valve.

In another embodiment, a venturi is disposed in the fluid path. At least part of the venturi is formed with the frontal face of a piston. The piston is movably mounted so that it may move transversely to the flow through the path, and so that as the velocity of the fluid flowing through the path increases, the difference between the reference pressure and the pressure in the venturi increases causing the piston to move in a direction narrowing the venturi. A restoring force is exerted on the piston in the direction that tends to move the piston so as to widen the venturi.

### Brief Description of the Drawings

Figs. 1, 2, 3 and 4 show cross-sections of several regulators according to the invention.

Fig. 5 shows a perspective view of a regulator that is an embodiment of the invention having several airfoils, wherein the near wall of the regulator has been removed to expose the interior of the regulator.

Fig. 6 shows a cross-section of the regulator shown in Fig. 5.

Figs. 7A and 7B show a cross-section of a portion of the regulator shown in Fig. 5; in Fig. 7A there is little or no flow through the regulator, and in Fig. 7B there is a greater flow.

Fig. 8 shows a perspective view of the exterior of the regulator shown in Fig. 5.

Fig. 9 shows how regulators according to the invention may be employed in regulating flow through a process chamber.

### Description of Specific Embodiments

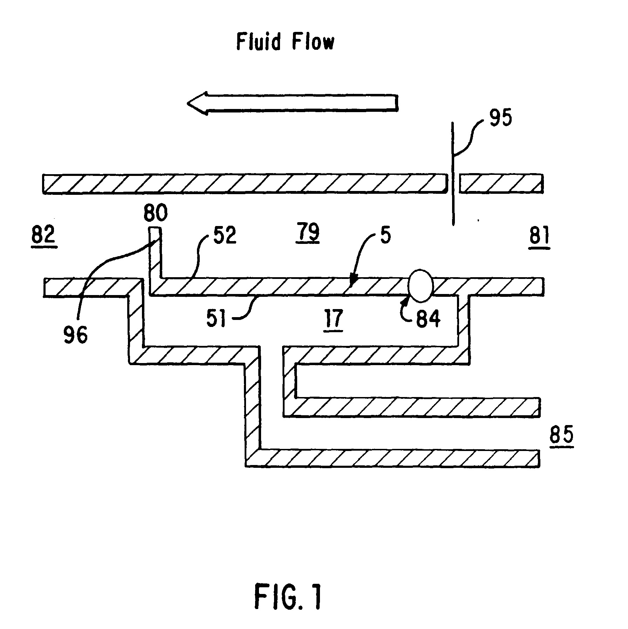

Fig. 1 shows a mass flow regulator according to the present invention. Air flows from the input **81**, past a variable resistor, which in this case is a gate valve **95**, into a chamber, called the plenum **79**. Air moves over the frontal face **52** of the piston **5**. The air flow is then modulated by constriction point **80**, which is formed by the upturned section **96** at the end of piston **5**. The piston **5** rotates about hinge **84**, so that member **96** moves in a direction transverse to the air flow. Preferably, the output **82** is connected to a vacuum source, but in any case the pressure at the output **82** must be lower than the pressure at the input **81**.

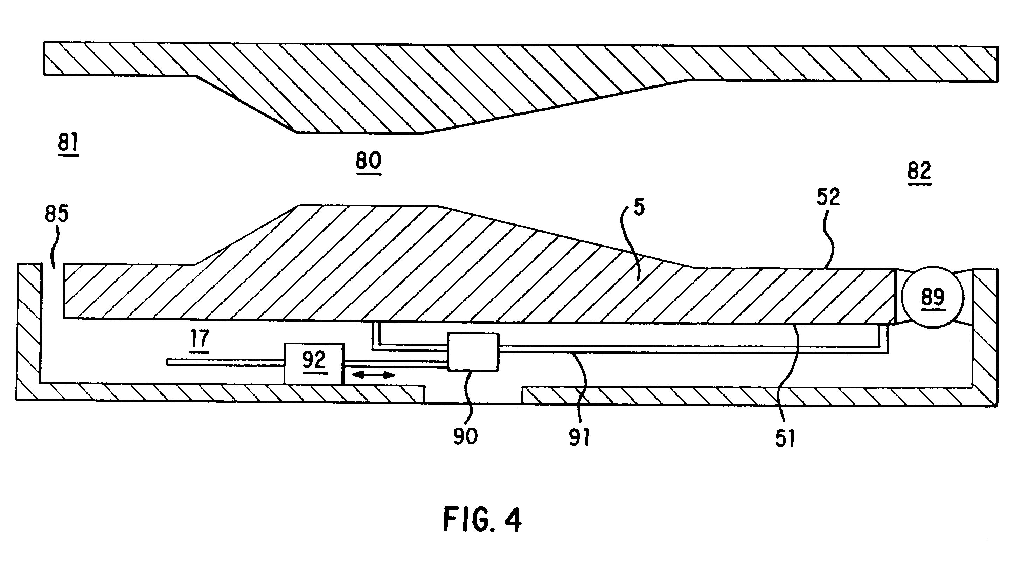

The pressure in the plenum **79** is related to the fluid forces on the frontal and distal faces, **52** and **51**, of the piston **5**, and the restoring force on the piston **5**. In the device shown in Fig. 1, the downward restoring force is caused by the weight of the piston **5**. Restoring force may also be supplied or modified by a spring, and/or, as shown in Fig. 4 below, by a slidable weight. The restoring force tends to open the constriction point **80**. The restoring force balances the force caused by the pressure differential between the plenum **79**, through which the air flows, and the reference-pressure chamber **17** (which should have a higher pressure than the plenum **79** does), so that the piston **5** floats. One may alter the pressure differential between the plenum **79** and the chamber **17** by altering the restoring force on the piston **5**, such as by using the slidable weight system shown in Fig. 4 below. It is important that the vacuum at the output **82** be strong enough to cause the piston **5** to float; without a sufficiently strong vacuum the regulator will not be able to maintain a constant pressure in the plenum **79**. With a sufficiently strong vacuum, the pressure in the plenum **79** will remain constant if the restoring force remains constant and the pressure in the chamber **17** remains constant. The chamber **17** is in fluid communication with the reference port **85**, which may be connected to the environment from which fluid flows to the input **81**.

If the pressure at the output **82** decreases, more fluid would tend to flow from the plenum **79** past the constriction point **80** to the output, which in turn would cause the pressure in the plenum **79** to drop, except a drop in the plenum pressure causes the piston **5** to rotate up and throttle the flow of fluid through the constriction point **80**. Likewise, an increase in pressure at the output **82** causes the constriction point to widen. In this way, as long as there is a sufficient vacuum at the output **82** to compensate for the downward restoring force on the piston **5**, the pressure in the plenum **79** remains a constant amount less than the reference pressure and independent of the pressure at the output.

Thus, the plenum **79** acts as a constant vacuum sink drawing in fluid flowing from input **81** past the gate valve **95,** which acts as a resistor. If the differential pressure between input **81** and plenum **79** remains constant, and the resistance to flow between input **81** and plenum **79** remains constant, the fluid mass flow rate will remain constant. The mass flow rate may be changed by changing the resistance to fluid flow caused by the gate valve **95**. A constant pressure differential between the input **81** and the plenum **79** can be maintained by venting the reference chamber **17** to the input **81**, which is accomplished by connecting reference port **85** to the input **81**. Adjusting the gate valve **95** causes more or less fluid to flow into plenum **79**, and the piston **5** and impeding member **96** will move down or up to modulate the pressure in the plenum **79**. By connecting the reference port **85** to the input **81**, a change in the input pressure will cause a corresponding change in the pressure of chamber **17**, which in turn will cause the piston **5** to move and either widen or narrow the constriction point **80** to maintain a constant pressure differential between the plenum **79** and the input **81**. By combining variable resistor **95** with a regulator that maintains a constant pressure differential across the variable resistor **95**, the device shown in Fig. 1 performs very well as a mass flow controller.

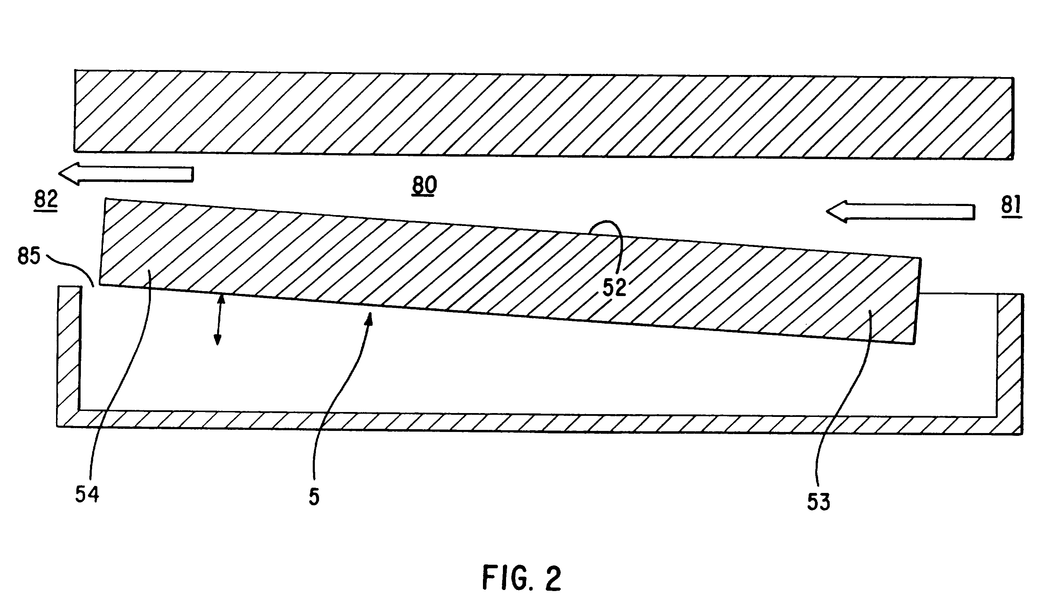

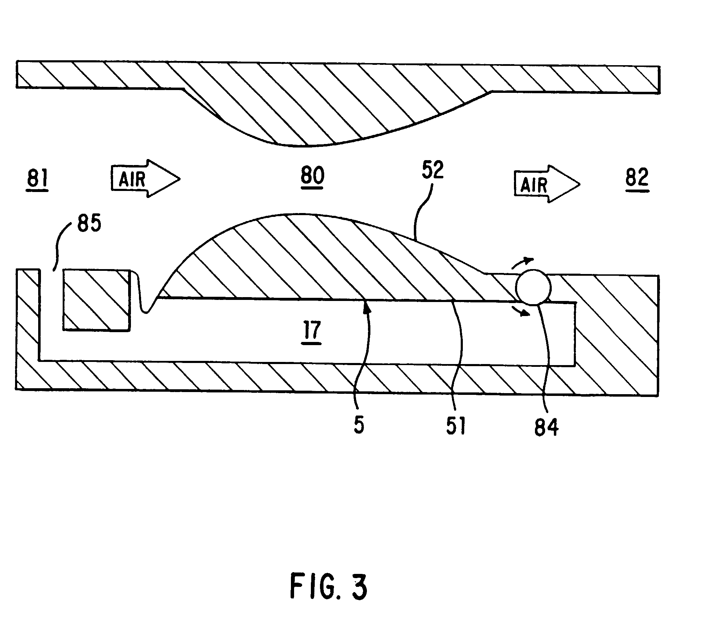

Fig. 2 shows another embodiment of the invention. In this version, a venturi **80**, which is formed in part by the top (frontal) face **52** of the piston **5**, does not gradually widen as the venturis shown in Figs. 3 and 4 below. The port **85** in this version is located at the output **82** of the device. The piston is pivotally mounted at one end **53**, while the other end **54** constricts the flow of fluid.

Fig. 3 shows another mass flow regulator. In this device fluid flows from the input **81**, through a venturi valve **80** that gradually narrows and widens the fluid passageway, to an output **82**. Part of the venturi is made of a movable piston **5**, which may move up to narrow the venturi or move down to widen the venturi. Preferably, the piston **5** is attached to the body of the device by a hinge **84** located near the output **82** of the device. The lower face of the piston **5**, the distal face **51**, is exposed to a chamber **17** having a reference pressure. This chamber **17** is vented to the input **81** by means of a port **85**, such that the reference pressure is equal to the pressure of the fluid at the input **81**. As the fluid flows through the device, the pressure in the venturi decreases because of the Bernoulli effect. This causes the piston **5** to tend to move up to narrow the venturi. The weight of the piston **5** tends to pull the piston downward. Another means of exerting a restoring force on the piston **5** would be with a spring. The force exerted by the weight of the piston, or other restoring force, balances with the force caused by the pressure differential between the chamber **17** and the venturi **80**, causing the piston to float (assuming the velocity of the fluid is great enough). As the velocity of the fluid increases, the pressure in the venturi, **80** will further decrease causing the piston to rise further. Thus, the cross-sectional area of the venturi **80** decreases. Since the mass flow rate of the fluid is equal to the product of the fluid's density, the cross-sectional area of the pathway and the velocity of the fluid, the mass flow rate remains fairly constant, i.e., the increased velocity is offset by the decreased cross-sectional area.

Fig. 4 shows a modified version of the Fig. 3 device, wherein the device can be adjusted to attain various mass flow rates. This is done by using a slidable mass **90**. The further to the left and away from the hinge **84** the mass **90** is located, the greater the tendency of the piston to move down and widen the venturi. The further to the right and closer to the hinge **84** the mass **90** is placed, the greater the tendency of the piston to rise and narrow the venturi. Thus, the desired mass flow rate can be increased by moving the mass **90** to the left, or decreased by moving the mass to the right. The movement of the mass can, of course, be accomplished manually; however, it can also be accomplished remotely by using a servo-motor **92** which can move the mass **90** back and forth. The servo-motor can then be controlled electrically.

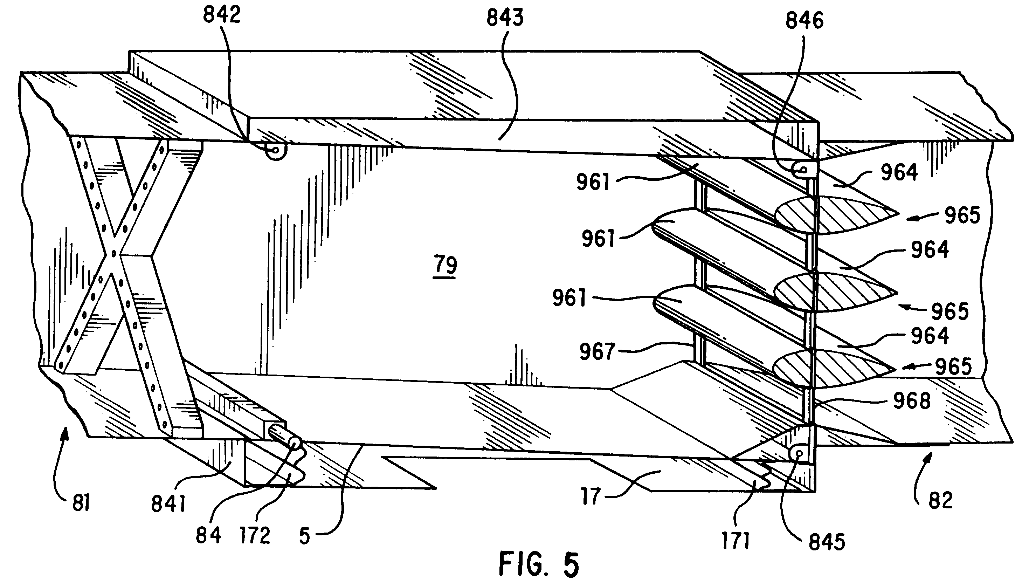

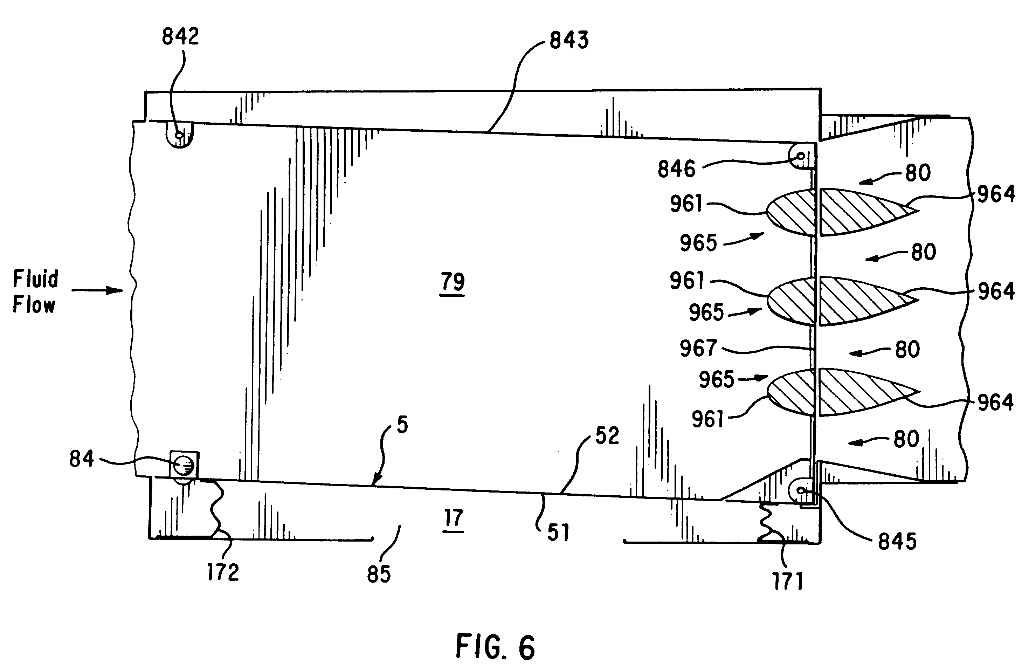

Figs. 5 and 6 are different perspectives of a preferred embodiment of the invention that has three airfoils **965** mounted in the path of the air flow. The airfoils **965** are divided into upstream segments **961** and downstream segments **964**. The upstream segments **961** in this embodiment are movable, whereas the downstream segments **964** are fixed to the walls of the fluid conduit. The upstream segments **961** are rigidly attached to each other by rods **967** and **968**, which in turn are hingedly attached at their lower ends to piston **5** at hinge point **845**. The piston **5** in this device, like the pistons of the devices shown in Figs. 1-4, is hingedly mounted so that it rotates about point **84**. The upper ends of rods **967** and **968** are also hingedly attached at hinge point **846** to upper member **843**, which in turn is hingedly mounted so that it rotates about point **842**. Because of these hinge connections, **84, 842, 845** and **846**, the upper member **843** moves in parallel with piston **5**. From the perspective shown in Fig. 6, the piston **5**, the upper member **843** and the rods **967** and **968** appear as three sides of a parallelogram with varying angles.

The piston **5** in the device shown in Figs. 5 and 6 is like the pistons shown in Figs. 1-4 in most respects. The frontal face **52** of the piston **5** is exposed to the air in the plenum **79**, and its distal face **51** is exposed to air in the reference chamber **17**, and pivots up and down depending on the pressure differential between the plenum **79** and the reference chamber **17**. As the piston 5 pivots up and down, air flowing through the device is more or less constricted. The reference chamber **17** has flexible membranes **171** and **172** mounted at its edges to prevent an undue amount of air from flowing from the reference chamber **17** around the hinge points **84** and **845** into the plenum **79**, which is normally at a lower pressure than the reference pressure when fluid is flowing through the device.

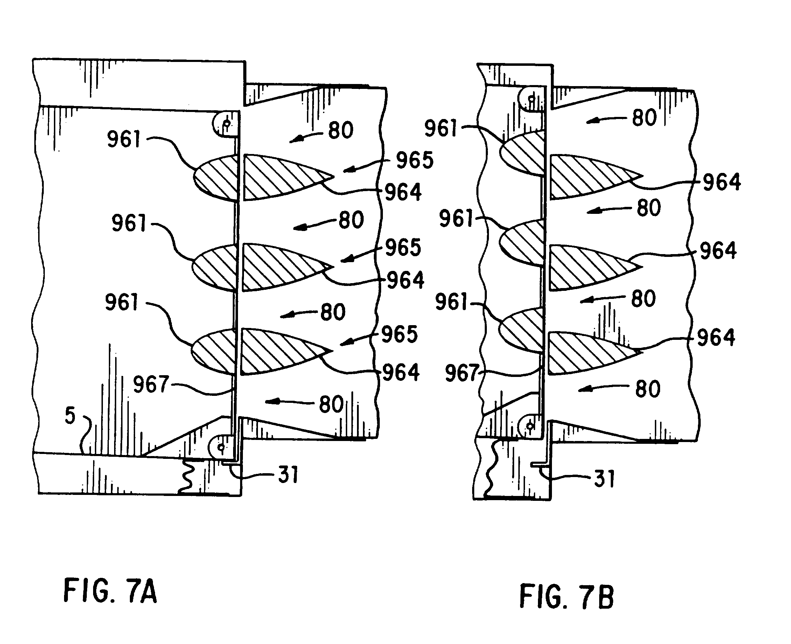

The device shown in Figs. 5 and 6 has four constriction points **80**, whereas the devices shown in Figs. 1-4 have only one constriction point **80**. Figs. 7A and 7B show how the upstream segments **961** are displaced with respect to downstream segments **964,** so as to narrow the constriction points **80**. As the piston **5** rises, it causes rods **967** and **968** (rod **968** is not shown in Figs. 7A and 7B) to move up, which, in turn, causes the upstream segments **961** of the airfoils **965** to rise. The downstream segments **964** are fixedly attached to the walls of the conduit and thus do not move. As segments **961** and **964** are displaced with respect to each other, the constriction points **80** narrow, and the impedance on the air flow increases.

In an alternative embodiment, the upstream segments **961** are fixedly attached to the conduit walls and the downstream segments **964** are attached to the piston **5** by means of rods **967** and **968**. The effect on fluid flow in this alternative embodiment is similar to that of the embodiment shown in Figs. 5, 6, 7A and 7B: when the piston **5** rises, the airfoil segments **961** and **964** are displaced with respect to each other, and the constriction points **80** are narrowed.

Instead of dividing the airfoils into only two segments, each airfoil may be divided into three segments, upstream, middle and downstream segments, wherein the upstream and downstream segments are fixedly attached to the conduit walls, and the middle segment is movable. Alternatively, some smaller portion of each airfoil may be displaceable from the rest of the airfoil so as to extend from the top of the airfoil and occlude the constriction point above the airfoil.

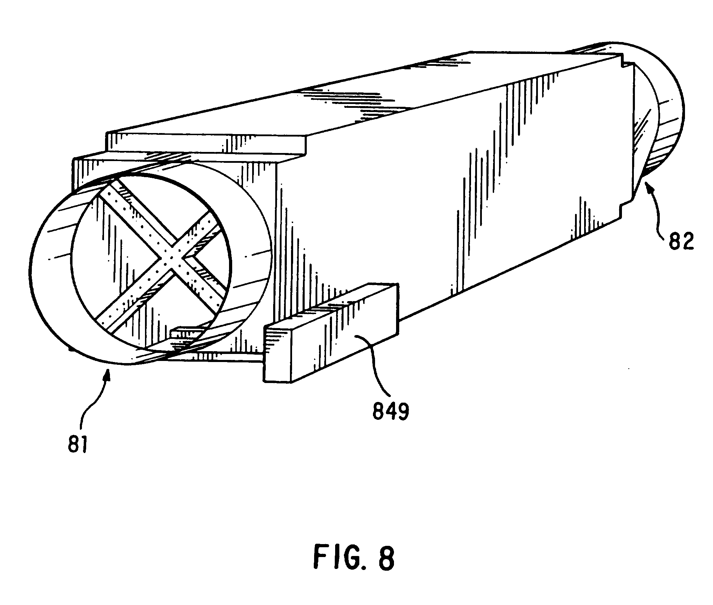

The restoring force created by the weight of the piston may be modified in a manner similar to that shown in the flow regulator shown in Fig. 4, which uses a slidable mass **90**. A guide arm **91**, along which the mass is slid, may be attached to the extension **841** (shown in Fig. 5) at the pivot point **84**. The mass **90** may be moved closer to or further from the pivot point **84** in order to alter the tendency of the piston **5** to move up or down. Preferably, the mass **90** is positioned by means of a servo-motor, which is controlled electrically from a remote location. This slidable mass apparatus may be located in a housing **849** located on the side of the regulator, as seen in Fig. 8. Fig. 8 shows the exterior of the regulator shown in Figs. 5 and 6.

The use of airfoils as a way of impeding flow may be adapted for use in a device for regulating flow from a air source to a process chamber at a lower pressure. The air foils are mounted upstream of the plenum. The piston is hingedly mounted over the plenum, so that, as the pressure in the plenum increases with respect to the reference (process chamber) pressure, the piston lifts a portion of the air foils, thereby increasing the impedance to the airfoil.

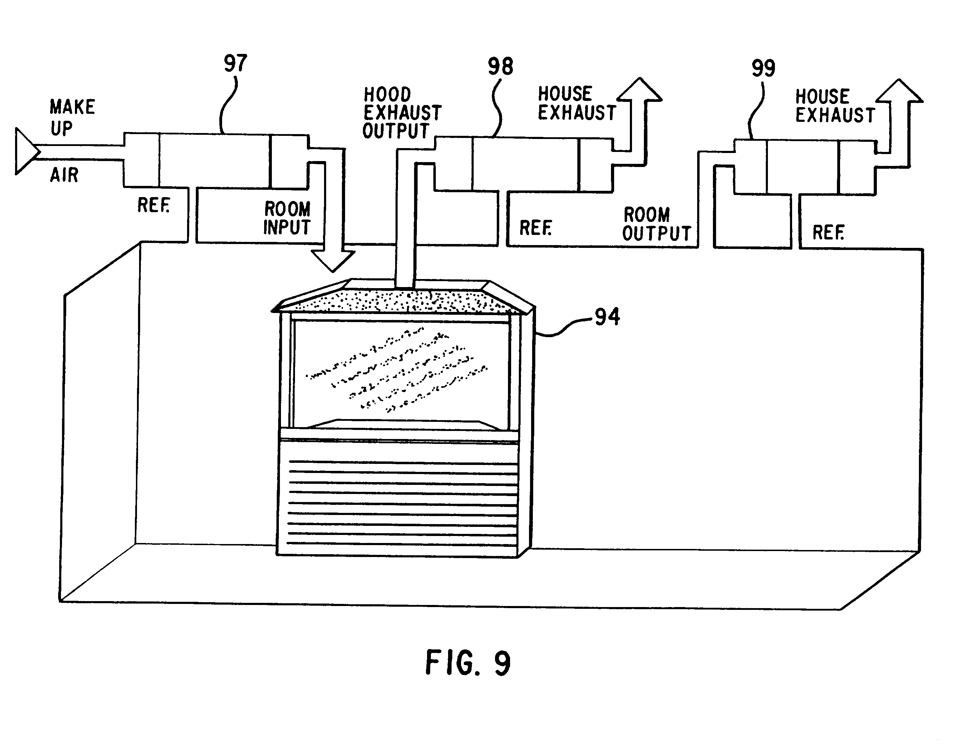

Fig. 9 shows how the regulators described hereinabove may be used to control the flow of air from a process chamber. Air enters the process chamber through one or more regulators **97**. The regulator shown in Figs. 5 and 6 in the present application may be used as regulator **98** in the Fig. 9 system. The reference chamber **17** is connected to the process chamber so that the pressure in the process chamber is the reference pressure. The input **81** of the regulator **98** is attached to the fume hood **94**, which draws noxious fumes. The regulator **98** maintains in the fume hood **94** a fairly constant vacuum relative to the process chamber (i.e., a lower pressure than the process chamber). Fume hoods frequently have doors that allow laboratory technicians access inside the fume hood **94**. When these doors are opened, the regulator **98** controlling the relative vacuum in the fume hood **94** increases the air flow through the fume hood, thereby maintaining the vacuum in the fume hood **94**.

Regulator **99** draws air directly from the process chamber, preferably at a constant mass flow rate. The regulator shown in Fig. 1, which has a gate valve **95** mounted upstream of the piston **5**, may be used to control the mass flow rate. Likewise, the regulator shown in Figs. 5 and 6 may be used to control the mass flow rate, if a throttling valve, such as gate valve **95** of the Fig. 1 regulator, is placed upstream of the piston **5**. The regulators shown in Figs. 2, 3 and 4 of the present application may also be used as the mass flow regulator **99** of the Fig. 9 system.

## Claims

1. A device for regulating the flow of fluid through a conduit, wherein the device includes impedance means (54)(96)(961) for variably impeding the flow of fluid through the conduit and restoring means (90) operably linked to the impedance means (54)(96)(961), wherein the impedance means (54)(96)(961) comprises a displaceable piston (5) having a distal face (51) which is exposed to a reference pressure and a frontal face (52) which forms a part of the wall of the conduit so that the impedance to the flow of fluid through the conduit varies as a function of the position of the displaceable piston (5), and wherein the restoring means (90) is adapted to displace the piston (5) so that the impedance to the flow of fluid through the conduit is reduced, characterised in that the piston (5) is pivotally mounted so as to rotate about a hinge point (84).

2. A device as claimed in claim 1, wherein the piston (5) is mounted so as to move in a direction substantially transverse to the direction of flow of fluid across the frontal face (52) of the piston (5) thereby widening or narrowing the conduit.

3. A device as claimed in claim 1 or 2, wherein the conduit is in communication with an environment, and the reference pressure is the pressure of the environment.

4. A device as claimed in claim 1, 2 or 3, further including variable resistance means (95) for variably impeding the flow of fluid into the conduit.

5. A device as claimed in claim 4, wherein the variable resistance means (95) is located upstream of the frontal face (52) of the piston (5), and wherein the reference pressure is the pressure of fluid upstream of the variable resistance means (95).

6. A device as claimed in any preceding claim, wherein the restoring means (90) includes the weight of the piston (5).

7. A device as claimed in any preceding claim, wherein the piston (5) includes a slidable weight (90) which may be moved towards or away from the hinge point (84) so as to vary the force exerted by the restoring means.

8. A device as claimed in any preceding claim, wherein the frontal (52) and distal (51) faces have approximately equal areas.

9. A device as claimed in any preceding claim, wherein the conduit is not vented at any point between the input (81) and the output (82) of the conduit so that the mass of fluid exiting the device through the output (82) is substantially equal to the mass of fluid entering the device through the input (81).

10. A device as claimed in any preceding claim wherein the piston (5) includes a lip (80) at the downstream end of the frontal face (52).

11. A device as claimed in any of claims 1 to 9, wherein the piston (5) includes one or more first portions (961) which on displacement of the piston (5) are displaced with respect to one or more corresponding second portions (964) so that the greater the relative displacement of the or each corresponding first (961) and second (964) portions the greater the impedance to the flow of fluid through the conduit.

12. A device as claimed in any of claims 1 to 9, wherein the piston (5) includes one or more first portions and one or more third portions, the or each first and third portions corresponding with the or each second portions, so that on displacement of the piston (5) the or each first and third portions are displaced with respect to the or each corresponding second portions so that the greater the relative displacement of the or each first and third portions with respect to the or each corresponding second portions the greater the impedance to the flow of fluid through the conduit.

13. A device as claimed in claim 11 or 12 wherein the first (961) and second (964) portions, or wherein the first, second and third portions, constitute an airfoil when the first and second, or first, second and third portions are aligned so as to correspond with one another.

14. A device as claimed in claim 11 wherein the first portion (961) is hingedly attached to the piston (5).

15. A device as claimed in claim 11 or 12, wherein the first portion (961) is upstream and the second portion (964) is downstream with respect to the direction of flow of the fluid through the conduit.

## Patentansprüche

1. Vorrichtung zum Regeln des Durchflusses eines Fluides durch eine Leitung, enthaltend eine Widerstandseinrichtung (54;96;961) zum variablen Behindern der Fluidströmung durch die Leitung und eine Wiederherstelleinrichtung (90), die mit der Widerstandseinrichtung (54;96;961) wirkungsmäßig verbunden ist, wobei die Widerstandseinrichtung (54;96;961) einen verstellbaren Kolben (5) aufweist, der eine einem Bezugsdruck ausgesetzte, der Strömung abgewandte Seite (51) und eine einen Teil der Wand der Leitung bildende Vorderseite (52) aufweist, sodaß der Fluidströmungswiderstand in der Leitung in Abhängigkeit von der Stellung des verstellbaren Kolbens (5) variiert, und wobei die Wiederherstelleinrichtung (90) dazu dient, den Kolben (5) so zu verstellen, daß der Fluidströmungswiderstand in der Leitung vermindert wird, **dadurch gekennzeichnet**, daß der Kolben (5) derart schwenkbar gelagert ist, daß er um einen Gelenkpunkt (84) schwenkt.

2. Vorrichtung nach Anspruch 1, bei der der Kolben (5) derart montiert ist, daß er sich in einer Richtung bewegt, die im wesentlichen quer zur Richtung der Fluidströmung über die Vorderseite (52) des Kolbens (5) verläuft, um dadurch die Leitung zu erweitern oder zu verengen.

3. Vorrichtung nach Anspruch 1 oder 2, bei der die Leitung mit einer Umgebung in Verbindung ist und der Bezugsdruck der Umgebungsdruck ist.

4. Vorrichtung nach Anspruch 1, 2 oder 3, weiterhin enthaltend eine variable Widerstandseinrichtung (50), um die Fluidströmung in der Leitung variabel zu behindern.

5. Vorrichtung nach Anspruch 4, bei der die variable Widerstandseinrichtung (95) stromaufwärts der Vorderseite (52) des Kolbens (5) angeordnet ist und der Bezugsdruck der Fluiddruck stromaufwärts der variablen Widerstandseinrichtung (95) ist.

6. Vorrichtung nach einem der vorhergehenden Ansprüche, bei der die Wiederherstelleinrichtung (90) das Gewicht des Kolbens (5) einschließt.

7. Vorrichtung nach einem der vorhergehenden Ansprüche, bei der der Kolben (5) einen verschiebbaren Gewichtskörper (90) aufweist, der in Richtung auf den Gelenkpunkt (84) und von diesem weg bewegt werden kann, um die Kraft zu verändern, die von der Wiederherstelleinrichtung aufgebracht wird.

8. Vorrichtung nach einem der vorhergehenden Ansprüche, bei der die Vorder- und Hinterseiten (52,51) ungefähr gleiche Flächen haben.

9. Vorrichtung nach einem der vorhergehenden Ansprüche, bei der die Leitung nirgends zwischen dem Eingang (81) und dem Ausgang (82) der Leitung entlüftet ist, sodaß die Fluidmasse, die die Vorrichtung durch den Ausgang (82) verläßt, im wesentlichen gleich der Fluidmasse ist, die in die Vorrichtung durch den Eingang (81) eintritt.

10. Vorrichtung nach einem der vorhergehenden Ansprüche, bei der der Kolben (5) eine Lippe (80) am stromabwärtigen Ende der Vorderseite (52) aufweist.

11. Vorrichtung nach einem der Ansprüche 1 bis 9, bei der der Kolben (5) einen oder mehrere erste Abschnitte (961) aufweist, die bei Verstellung des Kolbens (5) gegenüber einem oder mehreren entsprechenden zweiten Abschnitten (964) verstellt werden, sodaß der Fluidströmungswiderstand in der Leitung größer wird, je größer die relative Vestellung des oder der entsprechenden ersten (961) und zweiten (964) Abschnitte ist.

12. Vorrichtung nach einem der Ansprüche 1 bis 9, bei der der Kolben (5) einen oder mehrere erste Abschnitte und einen oder mehrere dritte Abschnitte aufweist, wobei der oder jeder erste und dritte Abschnitt mit dem oder jedem zweiten Abschnitt korrespondiert, sodaß bei Verstellung des Kolbens (5) der oder jeder erste und dritte Abschnitt gegenüber dem oder jedem korrespondierenden zweiten Abschnitt verstellt wird, sodaß der Fluidströmungswiderstand in der Leitung umso größer wird, je größer die relative Verstellung des oder jedes ersten und dritten Abschnitts gegenüber dem oder jedem korrespondierenden zweiten Abschnitt wird.

13. Vorrichtung nach Anspruch 11 oder 12, bei der die ersten (961) und zweiten (964) Abschnitte oder die ersten, zweiten und dritten Abschnitte einen Flügel bilden, wenn die ersten und zweiten oder ersten, zweiten und dritten Abschnitte so ausgerichtet sind, daß sie aneinander anschließen.

14. Vorrichtung nach Anspruch 11, bei der der erste Abschnitt (961) gelenkig an dem Kolben (5) angebracht ist.

15. Vorrichtung nach Anspruch 11 oder 12, bei der der erste Abschnitt (961) stromaufwärts und der zweite Abschnitt (964) stromabwärts in Bezug auf die Fluidströmungsrichtung in der Leitung liegen.

## Revendications

1. Dispositif de régulation de l'écoulement d'un fluide dans un conduit, dans lequel le dispositif comprend un moyen formant obstacle (54) (96) (961), servant à gêner de manière variable l'écoulement d'un fluide dans le conduit, et un moyen de rétablissement (90) couplé de manière opérationnelle au moyen formant obstacle (54) (96) (961), dans lequel le moyen formant obstacle (54) (96) (961) comprend un piston déplaçable (5) ayant une face distale (51) qui est exposée à une pression de référence et une face frontale (52) qui forme une partie de la paroi du conduit de sorte que la gêne à l'écoulement du fluide dans le conduit varie en fonction de la position du piston déplaçable (5), et dans lequel le moyen de rétablissement (90) est capable de déplacer le piston (5) pour diminuer la gêne à l'écoulement du fluide dans le conduit, caractérisé en ce que le piston (5) est monté de façon pivotante, de manière à pouvoir tourner autour d'un point d'articulation (84).

2. Dispositif selon la revendication 1, dans lequel le piston (5) est monté de manière à se déplacer dans une direction sensiblement transversale à la direction d'écoulement du fluide sur la face frontale (52) du piston (5), en élargissant ou rétrécissant ainsi le conduit.

3. Dispositif selon la revendication 1 ou 2, dans lequel le conduit est en communication avec une atmosphère environnante et la pression de référence est la pression de l'atmosphère environnante.

4. Dispositif selon la revendication 1, 2 ou 3, comprenant en outre un moyen (95) à résistance variable pour gêner de manière variable l'écoulement du fluide dans le conduit.

5. Dispositif selon la revendication 4, dans lequel le moyen (95) à résistance variable est placé en amont de la face frontale (52) du piston (5), et dans lequel la pression de référence est la pression du fluide en amont du moyen (95) à résistance variable.

6. Dispositif selon l'une quelconque des précédentes revendications, dans lequel le moyen de rétablissement (90) comprend le poids du piston (5).

7. Dispositif selon l'une quelconque des précédentes revendications, dans lequel le piston (5) comprend une masse coulissante (90) qui peut être éloignée ou rapprochée du point d'articulation (84) afin de faire varier la force exercée par le moyen de rétablissement.

8. Dispositif selon l'une quelconque des précédentes revendications, dans lequel les faces frontale (52) et distale (51) ont des superficies approximativement égales.

9. Dispositif selon l'une quelconque des précédentes revendications, dans lequel le conduit n'est ventilé en aucun point entre l'entrée (81) et la sortie (82) du conduit, de sorte que la masse de fluide qui sort du dispositif par la sortie (82) est sensiblement égale à la masse de fluide qui entre dans le dispositif par l'entrée (81).

10. Dispositif selon l'une quelconque des précédentes revendications, dans lequel le piston (5) comporte une lèvre (80) en l'extrémité aval de la face frontale (52).

11. Dispositif selon l'une quelconque des revendications 1 à 9, dans lequel le piston (5) comprend une ou plusieurs premières parties (961) qui, lors du déplacement du piston (5), sont déplacées par rapport à une ou plusieurs deuxièmes parties correspondantes (964) de sorte que plus le déplacement relatif des première (961) et deuxième (964) parties, ou de chacune d'elles, est grand et plus la gêne à l'écoulement du fluide dans le conduit est importante.

12. Dispositif selon l'une quelconque des revendications 1 à 9, dans lequel piston (5) comprend une ou plusieurs premières parties et une ou plusieurs troisièmes parties, les première et troisième parties, ou chacune d'elles, correspondant à la deuxième partie ou à chacune d'elles, de sorte que lors du déplacement du piston (5), les première et troisième parties, ou chacune d'elles, sont déplacées par rapport à la deuxième partie correspondante ou à chacune d'elles de telle sorte que plus le déplacement relatif des première et troisième parties, ou de chacune d'elles, par rapport à la deuxième partie correspondante ou à chacune d'elles, est grand et plus la gêne à l'écoulement du fluide dans le conduit est importante.

13. Dispositif selon la revendication 11 ou 12, dans lequel les première (961) et deuxième (964) parties, ou les première, deuxième et troisième parties, constituent un profil aérodynamique quand les première et deuxième parties ou les première, deuxième et troisième parties sont alignées en correspondance les unes avec les autres.

14. Dispositif selon la revendication 11, dans lequel la première partie (961) est fixée de manière articulée au piston (5).

15. Dispositif selon la revendication 11 ou 12, dans lequel la première partie (961) est en amont et la deuxième partie (964) en aval par rapport à la direction d'écoulement du fluide dans le conduit.
